# EUROPÄISCHE PATENTSCHRIFT

(11) **EP 4 414 143 B1**
(45) Veröffentlichungstag und Bekanntmachung des Hinweises auf die Patenterteilung: **02.04.2025**
(21) Anmeldenummer: 24151463.7
(22) Anmeldetag: 11.01.2024
(51) Int. Cl.: B25J 9/16, G05B 19/418, F16P 3/14, G01S 17/04

(54) **VERFAHREN UND BERÜHRUNGSLOSER DISTANZSENSOR ZUM ABSICHERN EINER MASCHINE**
METHOD AND CONTACTLESS DISTANCE SENSOR FOR SECURING A MACHINE
PROCÉDÉ ET CAPTEUR DE DISTANCE SANS CONTACT POUR SÉCURISER UNE MACHINE

(30) Priorität: 07.02.2023 DE 102023102951
(43) Veröffentlichungstag der Anmeldung: 14.08.2024
(73) Patentinhaber: SICK AG, 79183 Waldkirch (DE)
(72) Erfinder: Gebauer, Jens, 79183 Waldkirch (DE); Hofmann, Dr. Christoph, 79108 Freiburg (DE)

(56) Entgegenhaltungen:
- EP-A1- 3 112 900
- EP-A1- 3 988 256
- DE-A1- 102021 119 372
- US-A1- 2017 030 708

## Beschreibung

Die Erfindung betrifft ein Verfahren und einen berührungslosen Distanzsensor zum Absichern einer Maschine nach dem Oberbegriff von Anspruch 1 beziehungsweise 14.

Das primäre Ziel der Sicherheitstechnik ist, Personen vor Gefahrenquellen zu schützen, wie sie beispielsweise Maschinen im industriellen Umfeld darstellen. Die Maschine wird mit Hilfe von Sensoren überwacht, und wenn demnach eine Situation vorliegt, in der eine Person gefährlich nahe an die Maschine zu gelangen droht, wird eine geeignete Absicherungsmaßnahme ergriffen. In der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm IEC61496 oder EN61496 für berührungslos wirkende Schutzeinrichtungen (BWS). Zur Erfüllung dieser Sicherheitsnormen sind eine Reihe von Maßnahmen zu treffen, wie sichere elektronische Auswertung durch redundante, diversitäre Elektronik, Funktionsüberwachung oder Überwachung der Verschmutzung optischer Bauteile.

In der sicherheitstechnischen Überwachung von Robotern, speziell Leichtbaurobotern, besteht ein zunehmender Wunsch nach engerer Zusammenarbeit mit Personen (MRK, Mensch-Roboter-Kollaboration) auch in komplexen Umgebungen. Relevante Normen in diesem Zusammenhang sind beispielsweise die ISO 10218 für Industrieroboter oder die ISO 15066 für kollaborierende Roboter. Ähnliche Problemstellungen ergeben sich für andere Maschinen als Roboter, beispielsweise AGVs/AGCs (Automated Guided Vehicle/Container) oder Drohnen.

Bei Robotern begrenzt ein herkömmlicher Ansatz die Kraft derart, dass auch eine Kollision nicht zu ernsthaften Verletzungen führen kann. Zudem wird beim Design der mechanischen Roboterkomponenten bewusst auf kantenfreie, runde oder weiche Außenkonturen geachtet. Dabei bleiben jedoch Gefahrenquellen am Werkzeug selbst, das spitze, rotierende oder heiße Teile aufweisen kann. Außerdem verhindern die mechanischen Maßnahmen und Kraftbegrenzungen keine Quetschungen etwa der Hand zwischen Werkzeug und einer Halterung oder dergleichen auf einer Arbeitsfläche.

Hier besteht nun grundsätzlich die Möglichkeit, einen kleinen, leichten Distanzsensor beziehungsweise eine Mehrfachanordnung solcher Distanzsensoren mit dem Werkzeug am Roboterarm mitzubewegen. Mit einem entsprechenden Distanzsensor befasst sich die DE 10 2015 112 656 A1. Damit wird eine Art virtuelle Schutzglocke oder virtueller Schutzmantel um das Werkzeug aufgespannt und der Roboter bei Eindringen eines sicherheitsrelevanten Objekts gebremst oder angehalten. Der Distanzsensor ist jedenfalls im Verbund mit der übergeordneten Steuerung sicher ausgelegt, und zum Erreichen eines höheren Sicherheitsniveaus sind Tests in Form einer Referenzfahrt bei bekannten Referenzzielen möglich. Eine Annäherung an Oberflächen muss für jede Position eigens eingelernt werden, damit die Schutzglocke nicht durch die Oberfläche ausgelöst wird.

Oberflächennahe Bewegungsbahnen, wie zur Herstellung einer Kleberaupe oder einer Schweißbahn, können so nicht umgesetzt werden. Der herkömmliche Ansatz ist in dieser Form auch nicht für dynamisches Bewegungsverhalten geeignet, beispielsweise die nicht vorhersagbare Bewegungsbahn bei einer Ausweichbewegung oder eine Bewegungsbahn in Reaktion auf die Posenerkennung eines zu greifenden Werkstücks.

Die EP 3 988 256 A1 sorgt für eine flexiblere Schutzglocke durch Anpassung von Abstandsschwellen, die gleichsam die Länge der Messstrahlen vorgeben. In diese Anpassung fließt ein jeweiliger verfügbarer Maximalabstand bis zum nächsten Hintergrundobjekt ein. Der Maximalabstand wird aus dem erwarteten Verlauf des Sichtstrahls des absichernden Sensors und einer Topographie der Umgebung berechnet. Hierbei ergeben sich jedoch Probleme, wenn der angenommene Sichtstrahl von dem eigentlichen Sichtstrahl beziehungsweise die angenommene Topographie von der tatsächlichen Umgebung abweicht. Das ist besonders kritisch bei Kantentreffern, wo schon geringfügige Abweichungen zu völlig unterschiedlichen Abständen führen können.

Die DE 10 2018 118 265 A1 offenbart ein Verfahren und ein Überwachungssystem zum Absichern einer Maschine, bei dem in einer Einlernphase mit einem abstandsmessenden Sensor die Umgebung eines Roboters erfasst und daraus eine Referenzkarte gewonnen wird. In einer Betriebsphase wird die von dem Sensor erfasste Umgebung mit der Referenzkarte verglichen und durch eine Sicherheitsbewertung von Abweichungen entschieden, ob eine sicherheitsgerichtete Reaktion eingeleitet werden muss. Die Bewertung der Abweichung erfolgt durch ein Korrelationsmaß zwischen Sollansicht und Erfassung und ist in dieser Allgemeinheit für eine Absicherung der oben beschriebenen Art, die auf bestimmten Distanzmessstrahlen beruht, nicht geeignet.

Die EP 3 112 900 A1 offenbart ein System zum Absichern einer Maschine mit einem an der Maschine montierten Distanzsensor. Die Messdaten werden mit einem Modell des erwarteten Hintergrunds verglichen, der beispielsweise durch Wände, Erdaushub und dergleichen erwartete Umgebungsobjekte gebildet ist. Sofern das Volumen einer Abweichung genug Raum für eine Person ließe, wird die Maschine abgesichert. In einigen Ausführungsformen sind mehrere Distanzsensoren vorgesehen, beispielsweise zwei Distanzsensoren für eine redundante Messung und Auswertung.

In der DE 10 2021 119 372 A1 wird ein bewegliches Maschinenteil von einem mitbewegten Distanzsensor abgesichert, der längs mehrerer Messstrahlen je einen Abstandswert misst und mit einer Abstandsschwelle vergleicht. Die Funktionsfähigkeit des Distanzsensors wird anhand eines Vergleichs eines gemessenem Abstandswerts mit einem Referenzwert getestet, wobei dieser Test über mehrere Prüfposen des beweglichen Maschinenteils verteilt wird und mindestens eine Prüfpose in den Bewegungsablauf des Maschinenteils integriert ist.

Die nachveröffentlichte EP 4 385 676 A1 offenbart ein Verfahren zur Validierung einer Pose eines Roboters und/oder von Sensordaten eines mit dem Roboter mitbewegten Sensors. Dabei werden die Roboterbewegungen mit denen eines Robotermodells beziehungsweise die Sensormessdaten mit denen eines Sensormodells verglichen, das mit einem Umgebungsmodell zusammenwirkt. Wie schon zu EP 3 988 256 A1 diskutiert, genügen besonders an Kanten schon geringfügige Abweichungen zwischen Modell und Wirklichkeit für große Abweichungen der vorhergesagten und tatsächlichen Abstände. Daraus ergeben sich falsch-positive Objekterkennungen, die eine erhebliche Einschränkung der Verfügbarkeit nach sich ziehen. Mit anderen Worten kommt es zu Produktivitätseinbußen durch Sicherheitsmaßnahmen, die für ein aufgrund ungenauer Modellvorhersagen fälschlich angenommenes sicherheitsrelevantes Objekt ergriffen wurden.

Es ist daher Aufgabe der Erfindung, eine genauere Objekterkennung zu ermöglichen.

Diese Aufgabe wird durch ein Verfahren und einen berührungslosen Distanzsensor zum Absichern einer Maschine nach Anspruch 1 beziehungsweise 14 gelöst. Die Maschine ist insbesondere ein Roboter oder Roboterarm mit einem Werkzeug, das vornehmlich abzusichern ist (EOAS, End-of-Arm-Safeguarding). Dieses Anwendungsbeispiel eines Roboters wird im Folgenden vielfach stellvertretend verwendet, die Erläuterungen sind jeweils analog auf eine andere bewegliche Maschine zu übertragen, wie beispielsweise ein Fahrzeug oder AGV (Automated Guided Vehicle). Das Absichern basiert auf einer Objekterkennung in einem Arbeitsbereich der Maschine. Der Arbeitsbereich selbst ist in Form eines Umgebungsmodells oder Oberflächenmodells bekannt, das auch als Topographie oder 3D-Kontur des Arbeitsbereichs bezeichnet werden kann. Die Objekterkennung reagiert auf diejenigen Objekte, die unerwartet sind, demnach nicht zu dem Arbeitsbereich gehören und nicht in dem Oberflächenmodell repräsentiert sind, und sie zielt dabei vor allem auf Personen oder Körperteile zur Vermeidung von Unfällen mit Verletzungen.

Es wird mindestens ein berührungsloser Distanzsensor mit der Maschine mitbewegt, vorzugsweise daran angebracht, der mit mindestens einem Distanzmessstrahl einen tatsächlichen Messwert für einen Abstand bestimmt. Je nachdem, ob sich ein zu erkennendes Objekt in dem Distanzmessstrahl befindet, ist das der Abstand zu dem Arbeitsbereich oder dem Objekt.

Aus einer Pose des Distanzsensors wird ein erster virtueller Distanzmessstrahl gebildet, der dem Distanzmessstrahl entspricht beziehungsweise diesen modelliert oder simuliert. Der Begriff Pose bezeichnet die Position und/oder Orientierung in bis zu sechs Freiheitsgraden. Die Pose des Distanzsensors ergibt sich aus der Pose der Maschine und einen möglichen, vorab feststellbaren und damit korrigierbaren Versatz des Distanzsensors gegenüber der Maschine. Die Pose der Maschine lässt sich insbesondere aus einer Vorwärtskinematik der Maschine bestimmen. Vorwärtskinematik ist ein Begriff aus der Robotik, der sich aber auf andere Maschinen übertragen lässt. Es bedeutet die Bestimmung der Pose eines Endeffektors, ggf. auch weiterer kinematischer Parameter wie Geschwindigkeit und Beschleunigung, aus Informationen über die beweglichen Elemente, bei einem Roboterarm der Gelenke, von beispielsweise dort angebrachten Drehgebern. Bei einem Roboter wird die Vorwärtskinematik in aller Regel ohnehin für dessen Arbeitsablauf bestimmt. Diese Information lässt sich nutzen, um die Pose des Distanzsensors abzuleiten. Mit der Pose des Distanzsensors ist im Rahmen der Genauigkeit der Posenbestimmung klar, wo dessen Distanzmessstrahl verläuft, so dass dies durch den ersten virtuellen Distanzmessstrahl simuliert werden kann.

Aus dem Auftreffort des ersten virtuellen Distanzmessstrahls auf dem Oberflächenmodell des Arbeitsbereichs wird ein erster virtuelle Messwert für den Abstand berechnet. Das ist eine Vorhersage für den tatsächlichen Messwert aus dem ersten virtuellen Distanzmessstrahl und dem Oberflächenmodell, die gemeinsam das Messverhalten des Distanzsensors in der aktuellen Situation simulieren, sofern sich kein Objekt in dem Distanzmessstrahl befindet. Für die Objekterkennung wird dementsprechend der tatsächliche Messwert mit dem ersten virtuellen Messwert verglichen. Herkömmlich würde eine Abweichung jenseits einer Toleranz schon bedeuten, dass ein Objekt erkannt ist. Die Erfindung wählt einen sogleich erläuterten erweiterten Ansatz, in dem der genannte Vergleich nicht allein entscheidet.

Die Erfindung geht von dem Grundgedanken aus, mindestens einen weiteren virtuellen Distanzmessstrahl zu bilden und in den Vergleich einzubeziehen. Der mindestens eine weitere virtuelle Distanzmessstrahl ist gegenüber dem ersten virtuellen Distanzmessstrahl versetzt. Damit wird ganz analog der Auftreffort auf das Oberflächenmodell bestimmt und daraus ein weiterer virtueller Distanzmesswert berechnet. Der Versatz entspricht anschaulich einer möglichen Abweichung in der vorhergesagten Pose des Distanzsensors von der tatsächlichen Pose und/oder in dem Oberflächenmodell von dem tatsächlichen Arbeitsbereich. Der weitere virtuelle Messwert ist damit eine weitere denkbare Vorhersage für den tatsächlichen Messwert. Es wird nun verglichen, ob der tatsächliche Messwert mit den virtuellen Messwerten verträglich ist, d.h. mit dem ersten virtuellen Messwert und dem weiteren virtuellen Messwert oder den weiteren virtuellen Messwerten. Verträglich bedeutet insbesondere, dass der tatsächliche Messwert mit wenigstens einem der virtuellen Messwerte übereinstimmt, wobei statt theoretischer Identität eine Toleranz beispielsweise in Form einer Schwelle, eines absoluten oder relativen Positionsfehlers zugelassen sein kann. Ist der tatsächliche Messwert mit den virtuellen Messwerten unverträglich, so wird auf ein Objekt in dem Distanzmessstrahl geschlossen. Der tatsächliche Messwert passt dann nicht zu dem Oberflächenmodell und ist somit durch die bekannte Kontur beziehungsweise die bekannterweise im Arbeitsbereich vorhandenen Objekte nicht erklärbar.

Es handelt sich um ein computerimplementiertes Verfahren, dass beispielsweise in dem Distanzsensor oder einer Sicherheitssteuerung oder sonstigen Recheneinheit abläuft, die an den mindestens einen Distanzsensor und die Maschine angeschlossen ist. Auch eine Implementierung in der Maschinensteuerung oder eine verteilte Implementierung ist denkbar. Ferner sei noch angemerkt, dass das Bilden von virtuellen Distanzmessstrahlen lediglich eine Veranschaulichung der entsprechenden Berechnungen darstellt und es nicht erforderlich ist, dass in der Implementierung konkret ein Strahl repräsentiert ist. Vielfach kann eine sehr viel einfachere Berechnung erfolgen, die im Ergebnis der Bestimmung des Auftreffortes von virtuellen Distanzmessstrahlen entspricht.

Die Erfindung hat den Vorteil, dass ein besonders robustes Verfahren zur Objekterkennung erreicht wird. Durch Einbeziehung des mindestens einen weiteren virtuellen Distanzmessstrahls wird zusätzliche Information über die zu erwartenden tatsächlichen Messwerte gewonnen. Dies erlaubt ein deutlich verbessertes Urteilsvermögen, ob sich tatsächlich ein Objekt in dem Distanzmessstrahl befindet. Fehlerkennungen durch abweichende virtuelle Messwerte insbesondere an Kanten des Oberflächenmodells werden dadurch abgefangen. Die Erfindung erleichtert die einleitend diskutierten Möglichkeiten für die Absicherung von Bewegungen nahe einer Arbeitsfläche oder von dynamischen Bewegungen oder macht sie überhaupt erst der Praxis zugänglich.

Für ein erkanntes Objekt wird geprüft, ob dessen Anwesenheit zulässig ist, und andernfalls wird die Maschine in einen risikomindernden oder sicheren Zustand überführt. Ein erkanntes Objekt bedeutet noch nicht zwingend, dass eine Absicherung der Maschine erforderlich ist. Je nach Sicherheitskonzept kann ein Objekt für kurze Zeiten toleriert sein, als zu kleines Störobjekt ignoriert werden, sich ausreichend fern der eigentlichen Gefahr und insbesondere außerhalb von Schutzfeldern befinden und dergleichen mehr. Wenn aber ein erkanntes Objekt unter keine dieser definierten Zulässigkeitsbedingungen fällt, so wird ein Signal ausgelöst, das die Maschine in einen sicheren Zustand überführt. Risikomindernd bedeutet, dass zumindest schwerwiegende Unfallfolgen vermieden sind, wobei Unfälle durch einen sicheren Zustand im Rahmen des erreichten Sicherheitsniveaus ausgeschlossen werden. Je nach Anwendung und Situation kann dies durch Maßnahmen wie langsamere Bewegungen, einen eingeschränkten Arbeitsbereich oder notfalls ein Anhalten der Maschine erreicht werden.

Das Oberflächenmodell wird bevorzugt konfiguriert oder importiert, insbesondere als CAD-Modell, oder das Oberflächenmodell wird mit einem Sensor vermessen. Es ist nicht zwingend eine Messung der Topographie erforderlich, es kann auch ein 3D-Modell Grundlage der Erfassung sein, etwa ein CAD-Modell, das für viele Maschinen und auch im Falle einer Roboterzelle oft ohnehin zur Verfügung steht. Wenn vermessen wird, ist eine Erfassung ohne störende Maschinenbewegungen vorteilhaft. Prinzipiell kann der Distanzsensor selbst für die Vermessung eingesetzt werden. Ebenso denkbar ist ein besonderer Topographiesensor, beispielsweise ein Laserscanner oder eine Kamera, insbesondere eine 3D-Kamera. Der Topographiesensor kann auch ein sehr teurer oder aufwändig und nur mit Fachkenntnissen bedienbarer Sensor sein, da er nur kurzzeitig benötigt wird. Der Topographiesensor kann mit der Maschine mitbewegt werden oder in einer Außenperspektive angebracht sein. Konfiguration, Import oder Vermessung des Oberflächenmodells erfolgt vorzugsweise vorab. Alternativ oder ergänzend kann das Oberflächenmodell in einer Betriebsunterbrechung oder sogar dynamisch zur Laufzeit im Betrieb zumindest teilweise nachgeladen werden. Das ist beispielsweise sinnvoll, wenn ein Tray gegen ein anderes ausgetauscht wird, weil auf ein anderes zu produzierendes Teil gewechselt wird. Mit dieser Produktionsumstellung kann automatisch oder von Hand das Nachladen des entsprechenden Oberflächenmodells ausgelöst werden.

Ein modular aufgebautes Oberflächenmodell erleichtert solche Veränderungen, es müssen dann nur die veränderten Module oder Anteile dynamisch ausgetauscht werden. Vorteilhaft ist weiterhin im Falle einer manuellen Änderung an einem CAD-Modell die Möglichkeit, nach Abschluss der manuellen Änderung das verwendete Oberflächenmodell mit einem einfachen Befehl wie einem Mausklick anzupassen.

Den ersten virtuellen Distanzmessstrahl umgeben bevorzugt eine Vielzahl weiterer virtueller Distanzmessstrahlen. Dadurch wird ein ganzer Bereich möglicher Abweichungen zwischen dem ersten virtuellen Distanzmessstrahl und dem realen Distanzmessstrahl des Distanzsensors abgedeckt. Die Objekterkennung wird besonders robust.

Die Ausgangspunkte der weiteren virtuellen Distanzmessstrahlen bilden bevorzugt zumindest topologisch eine Kreislinie. Die weiteren virtuellen Distanzmessstrahlen decken damit Abweichungen in alle denkbaren Richtungen ab. Die weiteren virtuellen Distanzmessstrahlen bilden effektiv eine Art Mantelfläche, die von der Kreislinie ihrer Ausgangspunkte beziehungsweise ihres jeweiligen Ursprungs ausgeht. Der erste virtuelle Distanzmessstrahl liegt eingebettet in diesem Mantel. Eine zumindest topologische Kreislinie kann noch verformt und somit beispielsweise elliptisch oder sonst verzogen sein, einschließlich der Möglichkeit von Ecken wie bei einem Quadrat. Allerdings ist ein Kreis im geometrischen und nicht nur topologischen Sinn besonders bevorzugt, weil dies am einfachsten zu handhaben ist und dabei die Umgebung am besten repräsentiert.

Das Oberflächenmodell ist bevorzugt ein Polygonnetz, insbesondere ein Dreiecksnetz. Mit einem Polygonnetz oder Mesh kann die Kontur der Arbeitsumgebung in einer geeigneten Datenstruktur bei beliebiger gewünschter Präzision quantisiert werden. Das Polygonnetz ist aus Polygonflächenelementen zusammengesetzt, die im Folgenden kurz als Polygone bezeichnet werden.

Die weiteren virtuellen Distanzmessstrahlen treffen bevorzugt zueinander lückenlos benachbarte Polygone. Die Polygone, auf die virtuelle Distanzmessstrahlen auftreffen, sind mit anderen Worten zusammenhängend. Dies ist eigentlich eine Aussage über die Dichte der weiteren virtuellen Distanzmessstrahlen, die im Rahmen der Genauigkeit des Polygonnetzes für eine lückenlose Objekterkennung sorgen soll. Die Dichtebedingung kann an dem größten in dem Oberflächenmodell denkbaren Abstand kalibriert werden, denn für kleinere Abstände sind dann die von den weiteren virtuellen Distanzmessstrahlen getroffenen Polygone erst recht lückenlos benachbart. Die Bedingung lückenlos benachbarter Polygone muss nicht universell gelten, sondern kann beispielsweise auf Flächen in einem begrenzten Neigungswinkel zum Sensor begrenzt sein. Bei streifendem Auftreffen der Distanzmessstrahlen in einem ganz flachen Winkel beispielsweise müsste sonst eine im Limes unendliche Dichte von Distanzmessstrahlen erzeugt werden; solche Fälle sind nicht von praktischem Interesse. Besonders bevorzugt wird zumindest im größten denkbaren Abstand jedes der lückenlos benachbarten Polygone genau einmal getroffen. Mehrfachtreffer durch mehrere der weiteren virtuellen Distanzmessstrahlen sind für die Sicherheit unschädlich, kosten aber unnötig Rechenzeit ohne neue Informationen. In einer Ausführungsform, in der die Ausgangspunkte der weiteren virtuellen Distanzmessstrahlen eine Kreislinie bilden, lässt sich die Dichtebedingung über den Winkelabstand oder Umfangsabstand der weiteren virtuellen Distanzmessstrahlen formulieren, der entsprechend klein gewählt sein muss. Die lückenlos benachbarten Polygone bilden dann im Rahmen ihrer diskreten Auflösung einen Kreisbogen, der perspektivisch zu einem Ellipsenbogen verzerrt und durch Kanten in der Arbeitsumgebung geteilt sein kann.

Vorzugsweise werden virtuelle Messwerte für den Abstand für Polygone bestimmt, die von Polygonen eingeschlossen sind, auf denen weitere virtuelle Distanzmessstrahlen auftreffen. Damit wird effektiv der Teil des Oberflächenmodells, der durch die weiteren virtuellen Distanzmessstrahlen berücksichtigt wird, nach innen hin vervollständigt oder abgeschlossen. In einer Ausführungsform, in der die Ausgangspunkte der weiteren virtuellen Distanzmessstrahlen zumindest topologisch eine Kreislinie bilden, wird somit die gesamte Kreisfläche und nicht mehr nur die Kreislinie beziehungsweise der Umfang berücksichtigt. Wie oben schon angemerkt, ist das Auftreffen von virtuellen Distanzmessstrahlen in erster Linie eine Veranschaulichung, die so nicht der Implementierung entsprechen muss. Eingeschlossene Polygone beziehungsweise zugehörige virtuelle Messwerte können einfach mit wesentlich weniger Aufwand über die Berechnung eines Abstands zweier Punkte im Raum bestimmt werden.

Die Ausgangspunkte der weiteren virtuellen Distanzmessstrahlen bilden vorzugsweise ein Gitter. Das ist eine alternative Möglichkeit, eine flächige Nachbarschaft des Oberflächenmodells zu berücksichtigen statt nur einer Linie, insbesondere einer umgebenden Linie in Form einer zumindest topologischen Kreislinie. In vielen Implementierungen wird es weniger aufwändig sein, die im Vorabsatz vorgestellte Ausführungsform zu wählen, die bei gleicher berücksichtigter Fläche des Oberflächenmodells mit weniger weiteren virtuellen Distanzmessstrahlen auskommt. An die gegenseitigen Abstände der Ausgangspunkte ist vorzugsweise die oben genannte Dichtebedingungen zu stellen, so dass lückenlos alle Polygone im Bereich des Gitters von mindestens einem weiteren virtuellen Distanzmessstrahl getroffen werden. Das Gitter ist vorzugsweise regelmäßig, da es bei an sich denkbaren unregelmäßigen Abständen schwierig ist, die Dichtebedingung allgemein zu erfüllen. Es sei nochmals daran erinnert, dass es nicht erforderlich ist, in der Implementierung im Sinne einer direkten Repräsentation ein Gitter virtueller Distanzmessstrahlen zu bilden, es genügen jegliche teilweise deutlich einfacheren Berechnungen, um die entsprechenden virtuellen Messwerte zu gewinnen.

Die weiteren virtuellen Distanzmessstrahlen verlaufen bevorzugt parallel zu dem ersten virtuellen Distanzmessstrahl. Damit verlaufen die weiteren virtuellen Distanzmessstrahlen auch untereinander bevorzugt parallel. In einer Ausführungsform, in der die Ausgangspunkte der weiteren virtuellen Distanzmessstrahlen zumindest topologisch auf einer Kreislinie liegen, bilden dementsprechend die weiteren virtuellen Distanzmessstrahlen einen Zylindermantel. Prinzipiell sind schräg verlaufende weitere virtuelle Distanzmessstrahlen denkbar, insbesondere mit einem Kegelmantel anstelle eines Zylindermantels, aber dadurch werden vermeidbare Entfernungsabhängigkeiten eingeführt. In der Regel ist es in der Sicherheitstechnik nicht von Nutzen, wenn in größerem Abstand nur größere Objekte verlässlich erkannt werden, vielmehr ist umgekehrt ein Detektionsvermögen für den gesamten Arbeitsbereich definiert. Ein spitzer Winkel, in dem also die Distanzmessstrahlen aufeinander zulaufen, kann in manchen Ausführungsformen noch sinnvoll sein.

Der tatsächliche Messwert und die virtuellen Messwerte werden bevorzugt zyklisch neu bestimmt und verglichen. Zu Messzyklen, vorzugsweise für höchste Zeitauflösung zu jedem Messzyklus des Distanzsensors erfolgt somit eine Aktualisierung oder ein Update der virtuellen Messwerte. Daraus ergibt sich dann ein Detektionszyklus der Objekterkennung.

Vorzugsweise wird ein tatsächlicher Messwert, der größer ist als alle virtuellen Messwerte, als verträglich bewertet, und somit ist für diesen Fall kein Objekt in dem Distanzmessstrahl erkannt. In dieser Situation passt der tatsächliche Messwert innerhalb der Toleranzen zu keinem virtuellen Messwert. Es handelt sich aber um ein Objekt ferner als der Arbeitsbereich, und das ist sicherheitstechnisch unbedenklich. Ein solcher Umgang mit einem zu großen tatsächlichen Messwert erlaubt es, das Oberflächenmodell zu vereinfachen und beispielsweise Dellen, d.h. aus Sicht des Distanzsensor nach außen gewölbte Teilkonturen der Arbeitsumgebung, wegzulassen und durch eine ebene Fläche zu ersetzen. Alternativ wird nach dem Ruhestromprinzip stets ein Messwert verlangt, der das Modell bestätigt, also auch ein zu großer tatsächlicher Messwert nicht toleriert.

Der Distanzsensor weist bevorzugt mehrere Distanzmessstrahlen auf, mit denen ein jeweiliger tatsächlicher Messwert für den Abstand bestimmt und mit virtuellen Messwerten aus virtuellen Distanzmessstrahlen zu einem jeweiligen Distanzmessstrahl verglichen wird. In dieser Ausführungsform gibt es mehrere reale Messungen, wobei die entsprechenden Distanzmessstrahlen von demselben Distanzsensor ausgehen, jeweils ein Distanzmessstrahlen von einem von mehreren Distanzsensoren ausgeht oder ein- und mehrstrahlige Distanzsensoren gemischt verwendet werden. Für jeden dieser Distanzmessstrahlen wird das obige Verfahren durchgeführt, d.h. der jeweilige Distanzmessstrahl durch einen virtuellen Distanzmessstrahl simuliert und mindestens ein dazu versetzter weiterer virtueller Distanzmessstrahl gebildet, um durch Vergleich des tatsächlichen Messwerts des betrachteten Distanzmessstrahls mit den virtuellen Messwerten der zugehörigen virtuellen Distanzmessstrahlen ein Objekt in dem betrachteten Distanzmessstrahl zu erkennen.

Die Distanzmessstrahlen bilden vorzugsweise eine Schutzglocke, wobei kein Objekt in dem Distanzmessstrahl erkannt ist, wenn der tatsächliche Messwert eine Länge der Schutzglocke übersteigt. Die Schutzglocke liegt insbesondere um die Werkzeugspitze an einem Roboterarm, so dass Annäherungen an die Werkzeugspitze rechtzeitig erkannt werden. Die Schutzglocke muss nicht zwingend rundum geschlossen sein, etwa wenn von hinten aus mechanischen oder sonstigen Gründen kein Eingriff möglich ist. Objekte in einem Abstand größer als die Länge der Schutzglocke sind sicherheitstechnisch nicht relevant und werden deshalb in dieser Ausführungsform in der Objekterkennung ignoriert. Bei Annäherung an den Arbeitsbereich kann die Schutzglocke an das Oberflächenmodell angepasst werden, denn in dadurch verkürzte Bereiche der Schutzglocke ist ein Eingriff nicht möglich, sondern durch Abschnitte des Arbeitsbereichs versperrt. In dieser Ausführungsform ist besonders darauf zu achten, die Distanzmessstrahlen und die virtuellen Distanzmessstrahlen nicht zu verwechseln. Die Distanzmessstrahlen selbst bilden bereits einen Zylinder- oder Kegelmantel. Um jeden Distanzmessstrahl wird, in der bevorzugten Ausführungsform mit Ausgangspunkten von weiteren virtuellen Distanzmessstrahlen auf einer Kreislinie, ein eigener virtuelle Zylinder- oder Kegelmantel der weiteren virtuellen Distanzmessstrahlen gebildet.

Der Distanzmessstrahl führt vorzugsweise eine Scanbewegung aus. Das ist eine Alternative zur Verwendung mehrerer Distanzmessstrahlen, um einen größeren Bereich der Objekterkennung zu erzielen. Beides kann miteinander kombiniert werden, wie im Falle eines mehrstrahligen Laserscanners. Die virtuellen Distanzmessstrahlen werden für die jeweilige Scanposition des Distanzmessstrahls gebildet.

Der erfindungsgemäße berührungslose Distanzsensor zum Absichern einer Maschine, insbesondere eines Roboterarms, und zum Erkennen von Objekten in einem Arbeitsbereich der Maschine weist eine Steuer- und Auswertungseinheit auf, die dafür ausgebildet ist, einen tatsächlichen Messwert für einen Abstand zu dem Arbeitsbereich oder einem dort angeordneten Objekt zu messen und ein Objekt anhand des tatsächlichen Messwerts mit einem erfindungsgemäßen Verfahren in dem Distanzmessstrahl zu erkennen. Es handelt sich insbesondere um einen optoelektronischen Distanzsensor nach dem Lichtlaufzeitprinzip, wobei der Distanzsensor einen Lichtsender zum Aussenden eines Lichtsignals längs eines Distanzmessstrahls und einen Lichtempfänger zum Erzeugen eines Empfangssignals aus dem zurückkehrenden Lichtsignal aufweist und die Steuer- und Auswertungseinheit den tatsächlichen Messwert aus einer Lichtlaufzeit zwischen Aussenden und Empfangen des Lichtsignals bestimmt.

Dabei ist die Steuer- und Auswertungseinheit vorzugsweise zumindest nicht ausschließlich in den Distanzsensor selbst integriert, sondern wenigstens zum Teil in ein daran angeschlossenes System ausgelagert, wie einer Sicherheitssteuerung oder auch einer nicht sicheren Steuerung oder sonstigen Recheneinheit, die dann durch Redundanz oder Tests abgesichert wird. Auch die Maschinensteuerung kann zumindest Teile der Steuer- und Auswertungseinheit aufweisen. Die Implementierung außerhalb des Distanzsensors erleichtert die Aktualisierung und Anpassung an andere Anwendungen, außerdem kann der Distanzsensor auf diese Weise einfacher gehalten werden. Eine in den Distanzsensor integrierte Steuer- und Auswertungseinheit sowie eine über Distanzsensor und angeschlossene Recheneinheiten verteilte Implementierung ist aber auch denkbar.

Der Distanzsensor ist vorzugsweise an dem Endeffektor eines Roboters angebracht und sichert diesen mit einer durch mehrere Distanzmessstrahlen gebildeten Schutzglocke ab (EOAS, End of Arm Safeguarding). Die Anbringung an einer anderen beweglichen Maschine ist ebenfalls denkbar, etwa an einem AGV (automated guided vehicle), dann insbesondere in einer Ausführungsform als Laserscanner, der mit dem Distanzmessstrahl eine Scanbewegung ausführt. Diese Scanbewegung kann in einem Solid-State-Lidar auch lediglich emuliert sein. In einer weiteren möglichen Ausführungsform als 3D-Kamera, insbesondere TOF-Kamera (Time of Flight, 3D-Kamera mit Messung der Lichtlaufzeit in ihren Pixeln), spannt jedes Pixel einen Distanzmessstrahl auf, wobei Pixel zusammengefasst oder ausgewählt werden können, um bestimmte Distanzmessstrahlen zu ergeben.

Der Distanzsensor ist bevorzugt ein sicherer Sensor und/oder die Funktionsfähigkeit des Distanzsensors wird zyklisch überprüft und/oder die Abstandswerte mehrerer Distanzsensoren zur Erzeugung sicherer Abstandswerte werden untereinander verglichen. Es werden also sichere Abstandswerte gewonnen. Dabei kann der Distanzsensor schon selbst normgerecht ausgebildet sein. Sicherheit kann auch durch mehrere redundante und/oder diversitär redundante Distanzsensoren beziehungsweise zyklische Funktionstests hergestellt werden, oder es wird auf diesem Weg ein höheres Sicherheitsniveau erreicht. Begriffe wie sicher oder Sicherheitssensor sind im Sinne dieser Beschreibung immer so zu verstehen, dass eine Sicherheitsnorm für Anwendungen der Sicherheitstechnik oder zur Unfallvermeidung im industriellen Bereich, insbesondere für Maschinensicherheit, berührungslosen wirkende Schutzeinrichtungen, Industrieroboter, Kollaboration mit Robotern oder dergleichen erfüllt ist. Das können die einleitend genannten Normen oder deren Nachfolger, Erweiterung oder jeweilige Entsprechung in anderen Weltregionen sein.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine Übersichtsdarstellung einer abzusichernden Maschine am Beispiel eines Roboterarms mit einem daran angebrachten Distanzsensor, der eine virtuelle Schutzglocke erzeugt;
- Fig. 2: eine Blockdarstellung eines Absicherungssystems mit mindestens einem Distanzsensor;
- Fig. 3: eine schematische Darstellung eines Distanzmessstrahls und virtueller Distanzmessstrahlen;
- Fig. 4: eine Darstellung eines Polygonnetzes als Oberflächenmodell einer Arbeitsumgebung, mit Veranschaulichung der Auftreffpunkte eines Distanzmessstrahls und virtueller Distanzmessstrahlen;
- Fig. 5: eine schematische Darstellung eines Distanzmessstrahls und virtueller Distanzmessstrahlen sowie der damit bestimmten virtuellen Messwerte bei Messung an einer Kante;
- Fig. 6: eine Darstellung gemäß Figur 5 nun bei Messung auf einer ebenen Fläche;
- Fig. 7: eine schematische Darstellung zur Illustration eines vereinfachten Oberflächenmodells, wenn zu große tatsächliche Messwerte toleriert werden; und
- Fig. 8: eine schematische Darstellung einer Messsituation, in der ein Objekt an einer zugewandten geneigten Fläche nicht erkannt wird, um zu erläutern, warum dies nicht sicherheitskritisch ist.

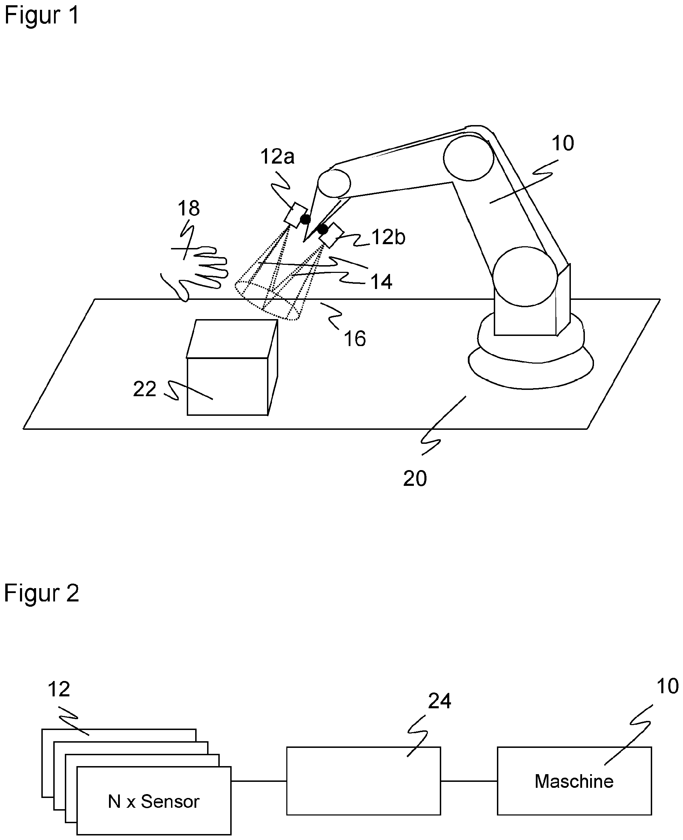

Figur 1 zeigt eine Übersichtsdarstellung eines abzusichernden Roboterarms 10. Der Roboterarm 10 und die spezielle Anwendung sind Beispiele, und die nachfolgenden Erläuterungen sind auf beliebige Roboter und andere abzusichernde bewegte Maschinen und Szenarien übertragbar, insbesondere AGVs/AGCs (Automated Guided Vehicle / Container) oder Drohnen.

Zur Absicherung hier speziell des Endeffektors an dessen Spitze sind an dem Roboterarm 10 Distanzsensoren 12a-b angebracht, vorzugsweise in der Umgebung eines Werkzeugs zu dessen Absicherung (EOAS, End-of-Arm-Safeguarding). Die Distanzsensoren 12a-b bestimmen Abstandswerte längs mehrerer Distanzmessstrahlen 14. Die gezeigte Anzahl von zwei Distanzsensoren 12a-b ist rein beispielhaft, es können mehr Distanzsensoren oder nur ein Distanzsensor sein, der dann vorzugsweise längs mehrerer Distanzmessstrahlen 14 messen kann. Allgemein gehen von jedem Distanzsensor 12a-b einer oder mehrere Distanzmessstrahlen 14 aus. Distanzmessstrahlen 14 können annähernd geometrische Strahlen sein oder einen endlichen Querschnitt aufweisen, wenn beispielsweise der Distanzsensor 12a-b als Flächentaster mit aufgefächertem Lichtstrahl arbeitet. Als Distanzsensoren 12a-b eignen sich besonders optoelektronische Abstandssensoren beispielsweise mit Messung der Lichtlaufzeit (ToF, Time of Flight). Die einleitend genannte DE 10 2015 112 656 A1 stellt ein derartiges System vor, auf das ergänzend verwiesen wird. Es gibt aber auch andere optoelektronische Sensoren, um Abstände zu bestimmen, wie Laserscanner und 2D- oder 3D-Kameras, ebenso wie ganz andere Technologien, etwa Ultraschallsensoren, kapazitive Sensoren, Radarsensoren und dergleichen.

Die Distanzmessstrahlen 14 gemeinsam bilden eine Art virtuellen Schutzmantel oder virtuelle Schutzglocke 16 um den Endeffektor. Greift eine Person beispielsweise mit ihrer Hand 18 in den mittels der Schutzglocke 16 abgesicherten Bereich ein, so wird die Schutzglocke 16 als verletzt angesehen. Deshalb wird eine sicherheitsgerichtete Reaktion des Roboters 10 ausgelöst, die abhängig von den verletzten Abstandsschwellen in einem Verlangsamen, Ausweichen oder einem Nothalt bestehen kann.

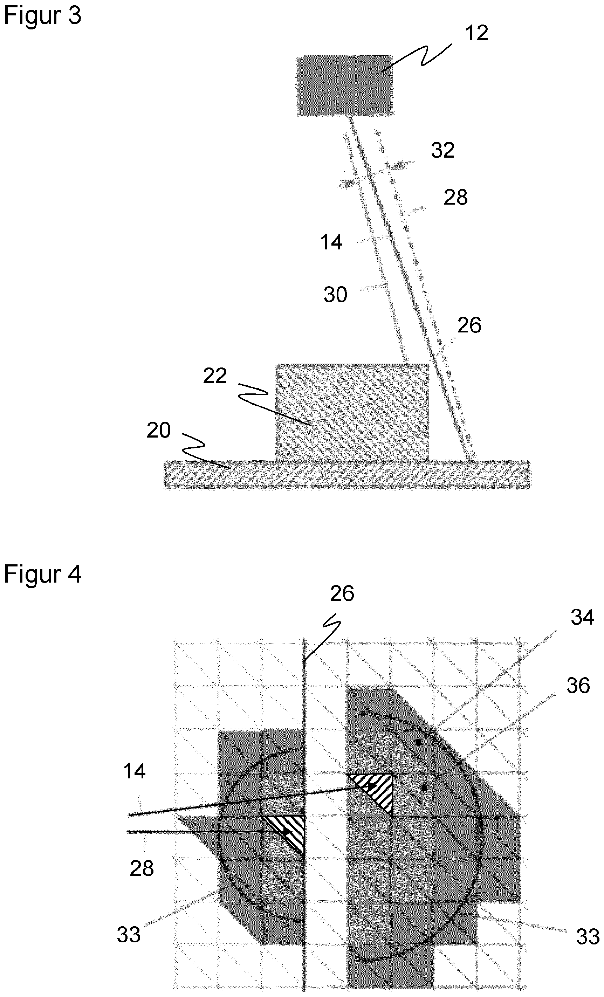

Die Detektion der Hand 18 in einem Distanzmessstrahl 14 erfolgt mittels einer Objekterkennung, die weiter unten unter Bezugnahme auf die Figuren 3 bis 8 genauer erläutert wird. In einer kurzen Zusammenfassung ist ein Oberflächenmodell der Arbeitsfläche 20 einschließlich darauf erwarteter Objekte 22 bekannt. Das Oberflächenmodell entspricht der 3D-Kontur oder Topographie der Arbeitsfläche 20 mit den darauf erwarteten Objekten 22 und ist vorzugsweise schon vorab bekannt. Beispielsweise wird es von Hand in einem CAD-Modell erstellt oder ein ohnehin vorhandenes Oberflächenmodell beispielsweise der Roboterzelle importiert. Ferner kann eine Konturvermessung durchgeführt werden, sei es mit dem Distanzsensor 12a-b selbst oder einem für das Einlernen des Oberflächenmodells außen und/oder an dem Roboter 10 angebrachten Topographiesensors, wie einem Laserscanner oder einer 3D-Kamera. Alternativ oder ergänzend zu einer Erstellung des Oberflächenmodells vorab kann das Oberflächenmodell auch im laufenden Betrieb oder während einer Betriebsunterbrechung neu erstellt oder modifiziert werden.

Aus der Pose des Distanzsensors 12a-b kann anhand des Oberflächenmodells vorhergesagt werden, welcher Abstand gemessen werden müsste, solange sich kein Objekt und insbesondere keine Hand 18 in dem Distanzmessstrahl 14 befindet. Die Pose wiederum wird aus den Roboterbewegungen berechnet, wobei diese sogenannte Vorwärtskinematik in der Regel ohnehin für die Robotersteuerung ermittelt und abgefragt werden kann. Das Messverhalten des Distanzsensors 12a-b wird somit simuliert, ein virtueller Messwert erzeugt, der mit dem tatsächlichen Messwert des Distanzsensors 12a-b verglichen werden kann, um aufzudecken, ob sich etwas anderes in dem Distanzmessstrahl 14 befindet als nach dem Oberflächenmodell erwartet. Es sei daran erinnert, dass erwartete Objekte 22 Teil des Oberflächenmodells sind und damit von der Objekterkennung ignoriert werden. Um den Vergleich robust zu machen, wird erfindungsgemäß nicht nur der Distanzmessstrahl 14 simuliert, sondern es wird mindestens ein zusätzlicher virtueller Messwert aus mindestens einem dem simulierten Distanzmessstrahl benachbarten weiteren virtuellen Distanzmessstrahlen bestimmt und verglichen. Das erhöht die Robustheit des Verfahrens insbesondere bei Kantentreffern beziehungsweise in der Nähe von Tiefensprüngen in der 3D-Kontur der Arbeitsfläche 20 mit darauf befindlichen erwarteten Objekten 22 beziehungsweise dem entsprechenden Oberflächenmodell.

Wie in Figur 1 zu sehen, genügt eine begrenzte Länge der Schutzglocke 16 für die Absicherung. Demnach können Messwerte des Distanzsensors 12a-b größer als diese Länge in der Objekterkennung vorzugsweise ignoriert werden, da nicht sicherheitsrelevant ist, ob sich in derart jenseitigen Abständen ein Objekt befindet oder nicht.

Figur 2 zeigt eine Blockdarstellung eines erfindungsgemäßen Absicherungssystems, wobei nun der Roboterarm wie schon als Möglichkeit erwähnt zu einer Maschine 10 verallgemeinert ist. Ein oder mehrere Distanzsensoren 12 sind wie in Figur 1 gezeigt mit dem abzusichernden Maschinenteil mitbewegt, um es gegen Eingriffe abzusichern und so Unfälle und Verletzungen zu vermeiden. Bei den Distanzsensoren 12 handelt es sich vorzugsweise um optoelektronische Sensoren nach dem Lichtlaufzeitprinzip, aber auch andere gleichartige oder gemischt verwendete Sensoren aus den oben angeführten Beispielen sind denkbar.

Die Abstandswerte werden an eine Steuer- und Auswertungseinheit 24 weitergegeben, wo die noch zu beschreibende Objekterkennung durchgeführt und von der erforderlichenfalls ein sicheres Signal an die Maschine 10 beziehungsweise deren Steuerung ausgegeben wird, um eine Sicherheitsreaktion auszulösen. Die Steuer- und Auswertungseinheit 24 kann wie dargestellt eine externe Recheneinheit, alternativ eine interne Recheneinheit des mindestens einen Distanzsensors 12 oder eine Kombination aus beidem sein. Beispiele für eine interne Recheneinheit sind digitale Rechenbausteine wie ein Mikroprozessor oder eine CPU (Central Processing Unit), ein FPGA (Field Programmable Gate Array), ein DSP (Digital Signal Processor), ein ASIC (Application-Specific Integrated Circuit), ein Kl-Prozessor, eine NPU (Neural Processing Unit), eine GPU (Graphics Processing Unit) oder dergleichen. Eine externe Recheneinheit kann ein Computer beliebiger Bauart einschließlich Notebooks, Smartphones, Tablets, einer (Sicherheits-)steuerung ebenso sein wie ein lokales Netzwerk, ein Edge-Device oder eine Cloud. Auch hinsichtlich der Kommunikationsverbindungen besteht eine große Auswahl, etwa I/O-Link, Bluetooth, WLAN, Wi-Fi, 3G/4G/5G und prinzipiell jeglicher industrietaugliche Standard.

Die Distanzsensoren 12 und die Steuer- und Auswertungseinheit 24 sollen vorzugsweise eine sichere Erfassung und Auswertung im Sinne der einschlägigen Normen leisten. Ein Weg dafür ist, dass sichere Sensoren und eine Sicherheitssteuerung eingesetzt werden. Es ist aber auch denkbar, originär nicht sichere Hardware zu verwenden und das geforderte Sicherheitsniveau durch Redundanz, auch diversitäre Redundanz, beziehungsweise Plausibilitätschecks oder zyklische Tests zu erreichen. Die nun zu beschreibende Objekterkennung trägt ihren Teil zur Erfüllung von Sicherheitsanforderungen bei.

Figur 3 zeigt eine schematische Darstellung eines Distanzmessstrahls 14, der nahe einer Kante 26 verläuft. Der Distanzsensor 12 misst den Abstand zu dem Auftreffpunkt des Distanzmessstrahls 14, der je nach Situation auf der Arbeitsfläche 20, einem dort erwarteten Objekt 22 oder einem zu erkennenden Objekt wie der Hand 18 liegt. Der gemessene Abstand wird in Abgrenzung zu den folgenden Simulationen als tatsächlicher Messwert bezeichnet. Im Folgenden wird angenommen, dass Distanzmessstrahlen 14 einzeln betrachtet werden. Das Vorgehen ist analog, wenn mehrere Distanzmessstrahlen 14 zusammengefasst werden und beispielsweise deren Mittelwert als zugehöriger tatsächlicher Messwert herangezogen wird. Ferner wird keine Kenntnis der Bewegungsbahn des mit der Maschine 10 mitbewegten Distanzsensors 12 vorausgesetzt. Andernfalls könnte einfach vorab eine Referenzfahrt durchgeführt werden, in der die erwarteten Messwerte für die Situation ohne zu erkennende Objekte samt erwartbarer Fehler eingelernt werden.

Da somit die aktuelle Pose des Distanzsensors 12 a priori unbekannt ist, wird sie zunächst bestimmt. Dazu wird beispielsweise auf die Vorwärtskinematik einer Robotersteuerung oder vergleichbare Daten einer sonstigen Maschinensteuerung zurückgegriffen. Ein etwaiger Posenversatz zwischen Maschine und Distanzsensor 12 kann durch anfängliche Konfiguration oder Kalibration ausgeglichen werden. Aus dieser Pose heraus wird nun der angenommene Verlauf des Distanzmessstrahls 14 berechnet. Das ist ein angenommener oder simulierter Distanzmessstrahl als virtuelle Entsprechung des Distanzmessstrahls 14, der hier als erster virtueller Distanzmessstrahl 28 bezeichnet wird. Mit dem ersten virtuellen Distanzmessstrahl 28 wird durch Bestimmung des Auftrefforts anhand des Oberflächenmodells ein erster virtueller Messwert für den Abstand berechnet. Eine Hand 18 im Distanzmessstrahl 14 würde den tatsächlichen Messwert deutlich verkürzen, so dass ein Vergleich zwischen tatsächlichen Messwert und erstem virtuellen Messwert ein Objekt in dem Distanzmessstrahl 14 erkennt.

Allerdings stimmen, wie auch in Figur 3 so dargestellt, Distanzmessstrahl 14 und erster virtueller Distanzmessstrahl 28 aufgrund von Ungenauigkeiten insbesondere in der Posenbestimmung und/oder dem Oberflächenmodell nicht exakt überein. An der Kante 26 führt das womöglich zu erheblichen Unterschieden zwischen dem tatsächlichen Messwert und dem ersten virtuellen Messwert und somit zu falsch-positiven Objekterkennungen.

Deshalb ist erfindungsgemäß vorgesehen, mindestens einen weiteren virtuellen Messwert zu erzeugen, indem dem ersten virtuellen Distanzmessstrahl 28 mindestens ein weiterer virtueller Distanzmessstrahl 30 zur Seite gestellt und der Abstand zu dessen Auftreffort anhand des Oberflächenmodells berechnet wird. Der weitere virtuelle Distanzmessstrahl 30 weist einen Versatz 32 zu dem ersten virtuellen Distanzmessstrahl 28 auf und verläuft vorzugsweise dazu parallel. Es gilt noch kein Objekt als erkannt, solange der tatsächliche Messwert mit den virtuellen Messwerten verträglich ist, also dem ersten virtuellen Messwert und dem mindestens einen weiteren virtuellen Messwert. Dazu erfolgt beispielsweise ein Vergleich des tatsächlichen Messwerts mit den virtuellen Messwerten, und es gilt noch kein Objekt als erkannt, solange zumindest einer dieser Vergleiche eine Übereinstimmung ergibt, vorzugsweise unter Zulassen einer Toleranz. Damit werden beide Situationen abgedeckt, dass der Distanzmessstrahl 14 diesseits oder jenseits der Kante 26 das Objekt 22 oder die Arbeitsfläche 20 trifft. Der begrenzte Versatz 32 sorgt dafür, dass die Sondersituation sehr unterschiedlicher virtueller Messwerte auf eine Umgebung der Kante beschränkt bleibt. Damit kann kein zu erkennendes Objekt mit Abmessungen größer dem Versatz 32 übersehen werden.

Mit nur einem weiteren virtuellen Distanzmessstrahl 30 werden denkbare Abweichungen der Simulation nur in einer einzigen Richtung berücksichtigt. Vorzugsweise wird daher eine Vielzahl weiterer virtueller Distanzmessstrahlen 30 gebildet, mit denen ganz entsprechend umgegangen wird. Vorzugsweise ist ein weiterer virtueller Distanzmessstrahl 30 in jede Richtung vorgesehen, so dass die Ausgangspunkte der weiteren virtuellen Distanzmessstrahlen 30 auf einer zumindest topologischen, vorzugsweise auch geometrischen Kreislinie liegen. Der Unterschied zwischen topologisch und geometrisch bedeutet wie in der Mathematik üblich, dass nur im ersteren Fall Verformungen zugelassen sind, also beispielsweise auch eine Ellipse oder ein Quadrat eine topologische Kreislinie ist. Der Fall einer geometrischen Kreislinie wird im Folgenden stellvertretend genauer erläutert, ohne die Erfindung darauf einzuschränken.

Figur 4 zeigt eine Darstellung eines Polygonnetzes (Mesh) als bevorzugte Repräsentation des Oberflächenmodells. Diese Repräsentation ist vorteilhaft, aber dennoch rein beispielhaft. Besonders bevorzugt sind die Polygone Dreiecke (Triangle Mesh). Die Darstellung ist eine Draufsicht auf eine Umgebung der Kante 26. Rechts neben der Kante 26 gibt es einen Bereich, der von dem Objekt 22 des Oberflächenmodells abgeschattet ist. Hier können rein geometrisch keine von dem Distanzsensor 12 ausgehenden Strahlen auftreffen.

Wegen der angesprochenen Abweichungen zwischen Realität und Simulation treffen der Distanzmessstrahl 14 und der erste virtuelle Distanzmessstrahl 28 unterschiedliche Polygone, und zwar abweichend von der Darstellung der Figur 3 nun diesseits und jenseits der Kante 26. Die weiteren virtuellen Distanzmessstrahlen 30 beschreiben entsprechend der angenommenen Ausführungsform mit Ausgangspunkten auf einer Kreislinie auf dem Polygonnetz kreisförmige oder je nach Neigung der Polygone etwas allgemeiner elliptische Kurvensegmente 33. Es werden weitere virtuelle Messwerte für die von den Kurvensegmenten 33 überstrichenen, in Figur 4 dunkel dargestellten Polygone 34 berechnet. Zusätzlich werden weitere virtuelle Messwerte auch für die innenliegenden, von den Kurvensegmenten 33 umgebenen und heller dargestellten Polygone 36 berechnet. Somit wird letztlich, rückwärts gedacht, jeweils ein weiterer virtueller Distanzmessstrahl 30 je Polygon der von den Kurvensegmenten 33 umschlossenen Fläche ausgewertet. Dabei fällt der erste virtuelle Messwert des ersten virtuellen Distanzmessstrahls 28 in dem gezeigten Beispiel mit einem der innenliegenden Polygone 36 zusammen. Diese Redundanz ist unschädlich, kann aber auch in der Implementierung abgefangen werden.

Die virtuellen Messwerte können in einem Array abgespeichert und zyklisch, insbesondere mit jedem Messzyklus des Distanzsensors 12, aktualisiert werden. In entsprechenden Auswertungszyklen der Objekterkennung, wiederum vorzugsweise mit jedem Messzyklus des Distanzsensors, wird verglichen, ob der tatsächliche Messwert mit den virtuellen Messwerten verträglich ist. Wie schon erläutert, wird dazu insbesondere verglichen, ob es wenigstens einen virtuellen Messwert gibt, der bis auf Toleranzen gleich dem tatsächlichen Messwert ist. Ist das der Fall, so ist der tatsächliche Messwert durch das Oberflächenmodell erklärbar, und es ist kein Objekt beziehungsweise keine Hand 18 erkannt. Andernfalls muss ein Objekt vorhanden sein und den Distanzmessstrahl 14 unterbrochen haben, denn sonst würde der tatsächliche Messwert nicht von allen virtuellen Messwerten um mehr als die Toleranz abweichen.

Damit die Polygone 34 unter den Kurvensegmenten 33 zusammenhängen, also keine Lücken aufweisen, liegen die weiteren virtuellen Distanzmessstrahlen 30 vorzugsweise entsprechend dicht. Das kann an einer Fläche in maximal möglichem Abstand des Oberflächenmodells kalibriert werden. Die hier beispielhaft diskutierte Anordnung mit Ausgangspunkten der weiteren virtuellen Distanzmessstrahlen 30 auf einer Kreislinie lässt sich als Rotation eines weiteren virtuellen Distanzmessstrahls 30 auf einem Kreis mit einem Radius o entsprechend dem Versatz 32 und einem gewissen Winkelinkrement w auffassen. Der Versatz 32 und damit der Radius o ist vorzugsweise so gewählt, dass sich der Distanzmessstrahl 14 bei allen erwarteten Fehlern in der Pose des Distanzsensors 12 beziehungsweise dem Oberflächenmodell innerhalb des Zylindermantels befindet, den die weiteren virtuellen Distanzmessstrahlen 30 aufspannen. Außerdem ist vorzugsweise das Winkelinkrement w so klein, dass die obige Dichtebedingung erfüllt ist, also die Polygone 34 unter den Kurvensegmenten 33 zusammenhängen.

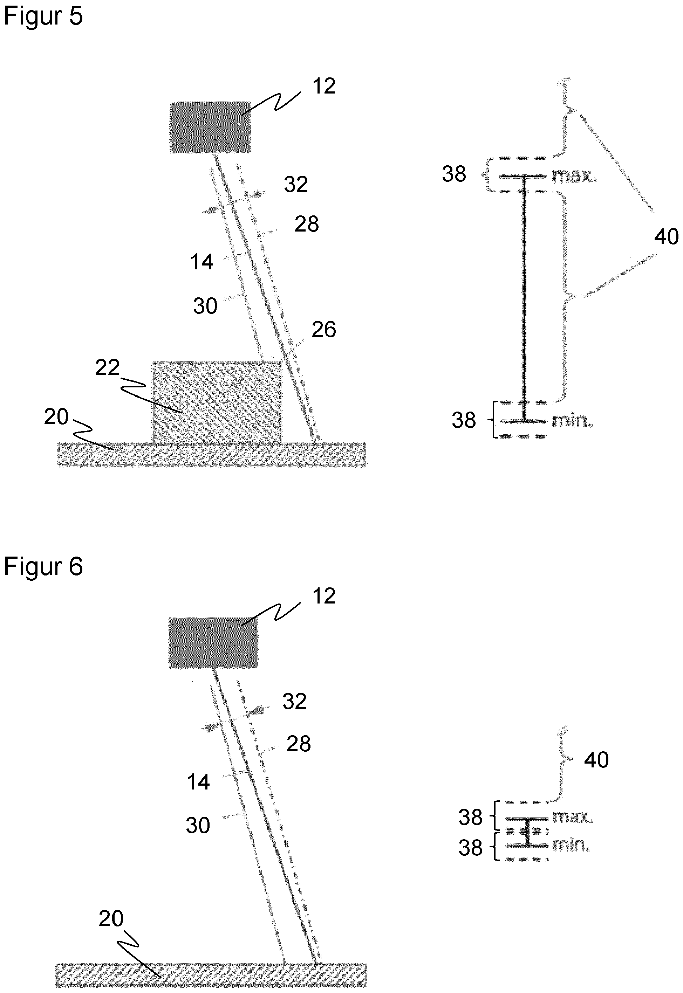

Figur 5 zeigt auf der linken Seite noch einmal die schematische Darstellung der Figur 3 und veranschaulicht auf der rechten Seite die virtuellen Messwerte in der Umgebung der Kante 26. Die Spreizung zwischen dem minimalen und maximalen virtuellen Messwert ist wegen der Kante 26 groß. Die Zwischenwerte werden von virtuellen Messwerten nicht angenommen, der Übergang an der Kante 26 ist abrupt. Ein tatsächlicher Messwert, der mit dem Oberflächenmodell verträglich ist, so dass also kein Objekt erkannt ist, darf nur in den Toleranzbereichen 38 um die virtuellen Messwerte liegen. Liegt ein tatsächlicher Messwert in dem großen verbleibenden empfindlichen Bereich 40, so ist ein Objekt erkannt.

Figur 6 zeigt zum Vergleich eine Darstellung gemäß Figur 5 nun ohne Kante 26 bei Messung auf einer ebenen Fläche. Hier ist der tatsächliche Messwert von vornherein nur mit einem ganz kleinen Bereich von Abstandswerten verträglich, da der minimale und maximale virtuelle Messwert sehr nahe beieinander liegen und sich effektiv so gut wie nur ein einziger Toleranzbereich 38 ergibt. Wiederum ist bei einem tatsächlichen Messwert in dem verbleibenden empfindlichen Bereich 40 ein Objekt erkannt.

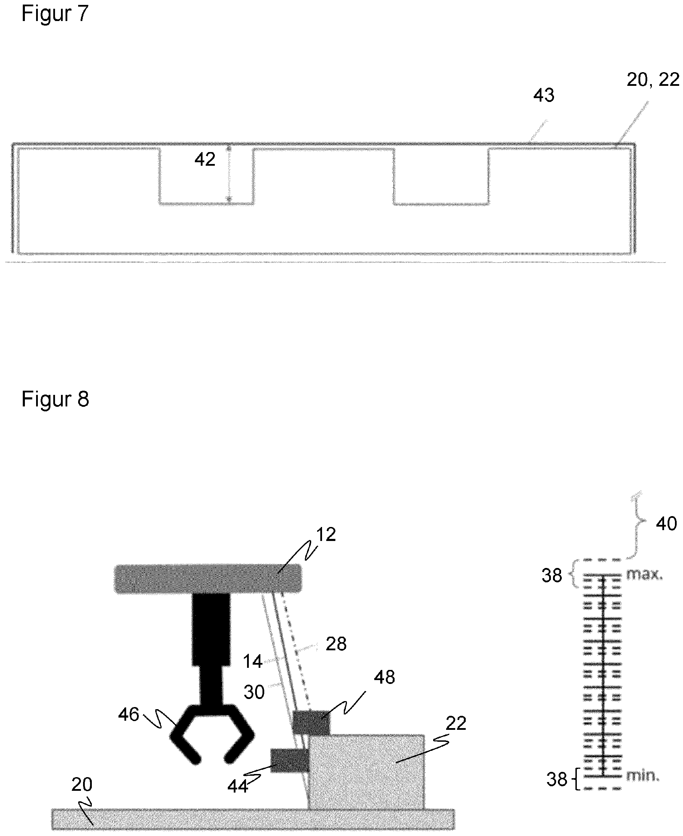

Figur 7 zeigt eine schematische Darstellung eines Oberflächenmodells, wobei hier die Kontur von Arbeitsfläche 20 und darauf befindlichen erwarteten Objekten 22 zusammengefasst ist. Es gibt in diesem Beispiel kleinere lokal begrenzte Vertiefungen 42, wie sie häufig auf einer Arbeitsfläche 20 eines Roboters vorkommen, etwa bei Schalen (Trays).

In einer bevorzugten Ausführungsform der Erfindung wird mit einem vereinfachten Oberflächenmodell 43 gearbeitet, dass diese Vertiefungen 42 ignoriert und stattdessen durchgehende Flächen annimmt. Die Vereinfachung führt dazu, dass der tatsächliche Messwert im Bereich einer Vertiefung 42 zu groß ist. Dementsprechend wird eine Objekterkennung nur durch einen zu kleinen, nicht aber einen zu großen tatsächlichen Messwert ausgelöst. Insbesondere muss für diesen Sonderfall der tatsächliche Messwert größer sein als sämtliche virtuellen Messwerte. Das ist sicherheitstechnisch zulässig, denn weiterhin ist ausgeschlossen, dass sich ein Objekt der Maschine 10 gefährlich angenähert hat.

Figur 8 zeigt eine schematische Darstellung einer besonderen Messsituation, in der ein beispielhaftes, an sich von einer Objekterkennung zu erfassendes Objekt 44 übersehen wird, wobei dies aber nicht sicherheitskritisch ist. Dieses Objekt 44 ist an einer dem Distanzsensor 12 zugeneigten Fläche angeordnet. Etwas allgemeiner gibt es an dem Objekt 22 des Oberflächenmodells beziehungsweise dessen Kante einen Tiefensprung, aber die weiteren virtuellen Distanzmessstrahlen 30 treffen auch auf der hier senkrechten Verbindungsfläche auf, so dass Zwischenwerte als virtuelle Messwerte erfasst werden. Wie rechts in Figur 8 illustriert, ergänzen die Zwischenwerte mit ihren jeweiligen Toleranzbereichen 38 einander quasi zu einem Kontinuum in einem Zwischenbereich zwischen dem minimalen und maximalen virtuellen Messwert. Der empfindliche Bereich 40 der Objekterkennung ist erheblich reduziert und schließt den Zwischenbereich aus. Ein tatsächlicher Messwert für das Objekt 44 ist deshalb mit den virtuellen Messwerten verträglich, die Objekterkennung schlägt auf das Objekt 44 nicht an. Das ist in der Situation der Figur 5 ganz anders, wo dieser Zwischenbereich außerhalb der Toleranzbereiche 38 liegt und ein empfindlicher Bereich 40 ist.

Obwohl die Objekterkennung demnach unvollständig ist, hat dies für die Absicherung keine Bedeutung. Es ist nämlich für die Hand 18 ein oder sonstiges zu schützendes Objekt physikalisch unmöglich, an den Ort des Objekts 44 zu gelangen, ohne zuvor in der Schutzglocke 16 bemerkt zu werden, die die in Figur 8 durch einen Greifer 46 dargestellte Gefahrenquelle absichert. Jegliches andere Objekt 48, das beispielhaft versuchen könnte, die Position des Objekts 44 zu erreichen, liegt sehr wohl in dem empfindlichen Bereich 40.

Alternativ zu dem beschriebenen Vorgehen ist denkbar, durch eine Kalibration eine hochgenaue Übereinstimmung zwischen Distanzmessstrahl 14 und erstem virtuellem Distanzmessstrahl 28 herzustellen und ein sehr genaues Oberflächenmodell zu erzeugen und ebenfalls zum Distanzsensor 12 und der realen Umgebung zu kalibrieren. Das ist jedoch aufwändig und auch nicht unbedingt langzeitstabil, so dass nach gewisser Betriebsdauer doch wieder falsch-positive Objekterkennungen entstehen. Eine einmalige oder auch wiederholte Kalibration ist dennoch ergänzend denkbar. Insbesondere kann nach einer Kalibration der Versatz 32 beziehungsweise der oben eingeführte Radius o klein bleiben und dennoch sichergestellt sein, dass der Distanzmessstrahl 14 innerhalb der weiteren virtuellen Distanzmessstrahlen 30 verläuft, wodurch der Aufwand für die Auswertungen begrenzt wird.

## Patentansprüche

1. Verfahren zum Absichern einer Maschine (10), insbesondere eines Roboterarms, bei dem Objekte (18) in einem Arbeitsbereich (20, 22) der Maschine (10) erkannt werden und für ein erkanntes Objekt (18) geprüft wird, ob dessen Anwesenheit zulässig ist, und andernfalls die Maschine (10) in einen risikomindernden oder sicheren Zustand überführt wird,
wobei Objekte (18) erkannt werden, indem
mindestens ein mit der Maschine (10) mitbewegter berührungsloser Distanzsensor (12) mit mindestens einem Distanzmessstrahl (14) einen tatsächlichen Messwert für einen Abstand zu dem Arbeitsbereich (20, 22) oder einem dort angeordneten Objekt (18) misst,
aus einer Pose des Distanzsensors (12) ein erster virtueller Distanzmessstrahl (28) gebildet wird, der den Distanzmessstrahl (14) simuliert, der Auftreffort des ersten virtuellen Distanzmessstrahls (28) auf ein Oberflächenmodell des Arbeitsbereichs (20, 22) bestimmt und ein erster virtueller Messwert für den Abstand berechnet wird
und der tatsächliche Messwert mit dem ersten virtuellen Messwert verglichen wird, um zu entscheiden, ob sich ein Objekt (18) in dem Distanzmessstrahl (14) befindet,
wobei
mindestens ein weiterer virtueller Distanzmessstrahl (30) mit einem Versatz (32) zu dem ersten virtuellen Distanzmessstrahl (28) gebildet, der Auftreffort des mindestens einen weiteren virtuellen Distanzmessstrahls (30) auf das Oberflächenmodell bestimmt und mindestens ein weiterer virtueller Messwert für den Abstand berechnet wird,
**dadurch gekennzeichnet,**
**dass** verglichen wird, ob der tatsächliche Messwert mit den virtuellen Messwerten verträglich, insbesondere bis auf eine Toleranz (38) gleich wenigstens einem der virtuellen Messwerte ist,
und **dass** ein Objekt (18) in dem Distanzmessstrahl (14) erkannt ist, wenn der tatsächliche Messwert nicht mit den virtuellen Messwerten verträglich ist.

2. Verfahren nach Anspruch 1,
wobei das Oberflächenmodell konfiguriert oder importiert wird, insbesondere als CAD-Modell, oder wobei das Oberflächenmodell mit einem Sensor vermessen wird.

3. Verfahren nach Anspruch 1 oder 2,
wobei den ersten virtuellen Distanzmessstrahl (28) eine Vielzahl weiterer virtueller Distanzmessstrahlen (30) umgeben, wobei insbesondere die Ausgangspunkte der weiteren virtuellen Distanzmessstrahlen (30) zumindest topologisch eine Kreislinie bilden.

4. Verfahren nach einem der vorhergehenden Ansprüche,
wobei das Oberflächenmodell ein Polygonnetz, insbesondere ein Dreiecksnetz ist.

5. Verfahren nach Anspruch 4,
wobei die weiteren virtuellen Distanzmessstrahlen (30) zueinander lückenlos benachbarte Polygone (34) treffen.

6. Verfahren nach Anspruch 4 oder 5,
wobei virtuelle Messwerte für den Abstand für Polygone (36) bestimmt werden, die von Polygonen (34) eingeschlossen sind, auf denen weiteren virtuelle Distanzmessstrahlen (30) auftreffen.

7. Verfahren nach einem der vorhergehenden Ansprüche,
wobei die Ausgangspunkte der weiteren virtuellen Distanzmessstrahlen (30) ein Gitter bilden.

8. Verfahren nach einem der vorhergehenden Ansprüche,
wobei die weiteren virtuellen Distanzmessstrahlen (30) parallel oder in einem spitzen Winkel zu dem ersten virtuellen Distanzmessstrahl (28) verlaufen.

9. Verfahren nach einem der vorhergehenden Ansprüche,
wobei der tatsächliche Messwert und die virtuellen Messwerte zyklisch neu bestimmt und verglichen werden.

10. Verfahren nach einem der vorhergehenden Ansprüche,
wobei ein tatsächlicher Messwert, der größer ist als alle virtuellen Messwerte, als verträglich bewertet wird und somit für diesen Fall kein Objekt (18) in dem Distanzmessstrahl (14) erkannt ist.

11. Verfahren nach einem der vorhergehenden Ansprüche,
wobei der Distanzsensor (12) mehrere Distanzmessstrahlen (14) aufweist, mit denen ein jeweiliger tatsächlicher Messwert für den Abstand bestimmt und mit virtuellen Messwerten aus virtuellen Distanzmessstrahlen (28, 30) zu einem jeweiligen Distanzmessstrahl (14) verglichen wird.

12. Verfahren nach einem der vorhergehenden Ansprüche,
wobei die Distanzmessstrahlen (14) eine Schutzglocke (16) bilden und wobei insbesondere kein Objekt (18) in dem Distanzmessstrahl (14) erkannt ist, wenn der tatsächliche Messwert eine Länge der Schutzglocke (16) übersteigt.

13. Verfahren nach einem der vorhergehenden Ansprüche,
wobei der Distanzmessstrahl (14) eine Scanbewegung ausführt.

14. Berührungsloser Distanzsensor (12), insbesondere optoelektronischer Distanzsensor nach dem Lichtlaufzeitprinzip, zum Absichern einer Maschine (10), insbesondere eines Roboterarms, und zum Erkennen von Objekten (18) in einem Arbeitsbereich (20, 22) der Maschine (10), wobei der Distanzsensor (12) einen Lichtsender zum Aussenden eines Lichtsignals längs eines Distanzmessstrahls (14), einen Lichtempfänger zum Erzeugen eines Empfangssignals aus dem zurückkehrenden Lichtsignal und eine Steuer- und Auswertungseinheit (24) aufweist, die dafür ausgebildet ist, einen tatsächlichen Messwert für einen Abstand zu dem Arbeitsbereich (20, 22) oder einem dort angeordneten Objekt (18) zu messen und das Objekt (18) anhand des tatsächlichen Messwerts mit einem Verfahren nach einem der vorhergehenden Ansprüche in dem Distanzmessstrahl (14) zu erkennen.

## Claims

1. A method of safeguarding a machine (10), in particular a robot arm, in which objects (18) are recognized in a work zone (20, 22) of the machine (10) and in which a check is made for a recognized object (18)t whether its presence is permitted and the machine (10) is otherwise switched into a risk-reducing or safe state,
wherein objects (18) are recognized in that
at least one contactless distance sensor (12) that is moved along with the machine (10) and that has at least one distance measurement beam (14) measures an actual measured value for a distance from the work zone (20, 22) or from an object (18) arranged there;
a first virtual distance measurement beam (28) that simulates the distance measurement beam (14) is formed from a pose of the distance sensor (12), the site of incidence of the first virtual distance measurement beam (28) on a surface model of the work zone (20, 22) is determined, and a first virtual measured value is calculated for the distance;
and the actual measured value is compared with the first virtual measured value to decide whether an object (18) is in the distance measurement beam (14),
wherein at least one further virtual distance measurement beam (30) having an offset (32) from the first virtual distance measurement beam (28) is formed, the site of incidence of the at least one further virtual distance measurement beam (30) on the surface model is determined, and at least one further virtual measured value is calculated for the distance;
**characterized in that**
a comparison is made whether the actual measured value is compatible with the virtual measured values, is in particular the same as at least one of the virtual measured values except for a tolerance (38);
and **in that** an object (18) is recognized in the distance measurement beam (14) if the actual measured value is not compatible with the virtual measured values.

2. A method in accordance with claim 1,
wherein the surface model is configured or imported, in particular as a CAD model; or wherein the surface model is measured by a sensor.

3. A method in accordance with claim 1 or claim 2,
wherein a plurality of further virtual distance measurement beams (30) surround the first virtual distance measurement beam (28) with in particular the starting points of the further virtual distance measurement beams (30) at least topologically forming a circular line.

4. A method in accordance with any one of the preceding claims,
wherein the surface model is a polygon mesh, in particular a triangle mesh.

5. A method in accordance with claim 4,
wherein the further virtual distance measurement beams (30) are incident on polygons (34) that are adjacent to one another without gaps.

6. A method in accordance with claim 4 or claim 5,
wherein virtual measured values are determined for the distance for polygons (36) that are enclosed by polygons (34) on which further virtual distance measurement beams (30) are incident.

7. A method in accordance with any one of the preceding claims,
wherein the starting points of the further virtual distance measurement beams (30) form a grating.

8. A method in accordance with any one of the preceding claims,
wherein the further virtual distance measurement beams (30) extend in parallel with or at an acute angle to the first virtual distance measurement beam (28).

9. A method in accordance with any one of the preceding claims,
wherein the actual measured value and the virtual measured values are determined and compared again cyclically.

10. A method in accordance with any one of the preceding claims,
wherein an actual measured value that is larger than all the virtual measured values is evaluated as compatible and no object (18) is thus recognized in the distance measurement beam (14) for this case.

11. A method in accordance with any one of the preceding claims,
wherein the distance sensor (12) has a plurality of distance measurement beams (14) with which a respective actual measured value is determined for the distance and is compared with virtual measured values from virtual distance measurement beams (28, 30) for a respective distance measurement beam (14).

12. A method in accordance with any one of the preceding claims,
wherein the distance measurement beams (14) form a protective cover (16); and wherein in particular no object (14) is recognized in the distance measurement beam (14) when the actual measured value exceeds a length of the protective cover (16).

13. A method in accordance with any one of the preceding claims,
wherein the distance measurement beam (14) performs a scan movement.

14. A contactless distance sensor (12) in particular an optoelectronic distance sensor in accordance with the time of flight principle, for safeguarding a machine (10), in particular a robot arm, and for recognizing objects (18) in a work zone (20, 22) of the machine (10), wherein the distance sensor (12) i has a light transmitter for transmitting a light signal along a distance measurement beam (14), a light receiver for generating a received signal from the returning light signal, and a control and evaluation unit (24) that is configured to measure an actual measured value for a distance from the work zone (20, 22) or from an object (18) arranged there, and to recognize the object (18) with reference to the actual measured value using a method in accordance with any one of the preceding claims in the distance measurement beam (14).

## Revendications

1. Procédé pour sécuriser une machine (10), en particulier un bras de robot, consistant à détecter des objets (18) dans une zone de travail (20, 22) de la machine (10) et à vérifier, pour un objet (18) détecté, si sa présence est autorisée et, dans le cas contraire, à faire passer la machine (10) dans un état de réduction des risques ou de sécurité,
les objets (18) étant détectés du fait que
au moins un capteur de distance sans contact (12), se déplaçant avec la machine (10), mesure une valeur de mesure réelle pour une distance par rapport à la zone de travail (20, 22) ou à un objet (18) qui y est disposé, au moyen d'au moins un faisceau de mesure de distance (14),
un premier faisceau de mesure de distance virtuel (28) est formé à partir d'une pose du capteur de distance (12), lequel simule le faisceau de mesure de distance (14), le lieu d'impact du premier faisceau de mesure de distance virtuel (28) sur un modèle de surface de la zone de travail (20, 22) est déterminé, et une première valeur de mesure virtuelle pour la distance est calculée,
et la valeur de mesure réelle est comparée à la première valeur de mesure virtuelle pour décider si un objet (18) se trouve dans le faisceau de mesure de distance (14),
sachant que
au moins un autre faisceau de mesure de distance virtuel (30) est formé avec un décalage (32) par rapport au premier faisceau de mesure de distance virtuel (28), le lieu d'impact dudit au moins un autre faisceau de mesure de distance virtuel (30) sur le modèle de surface est déterminé, et au moins une autre valeur de mesure virtuelle pour la distance est calculée,
**caractérisé en ce que**
la valeur de mesure réelle est comparée aux valeurs de mesure virtuelles, pour savoir si elle est compatible avec celles-ci, en particulier si elle est égale à l'une au moins des valeurs de mesure virtuelles, à une tolérance (38) près,
et **en ce qu'**un objet (18) est détecté dans le faisceau de mesure de distance (14) si la valeur de mesure réelle n'est pas compatible avec les valeurs de mesure virtuelles.

2. Procédé selon la revendication 1,
dans lequel le modèle de surface est configuré ou importé, en particulier sous forme de modèle CAO, ou le modèle de surface est mesuré au moyen d'un capteur.

3. Procédé selon la revendication 1 ou 2,
dans lequel une pluralité d'autres faisceaux de mesure de distance virtuels (30) entourent le premier faisceau de mesure de distance virtuel (28), en particulier, les points de départ des autres faisceaux de mesure de distance virtuels (30) forment, au moins sur le plan topologique, une ligne circulaire.

4. Procédé selon l'une des revendications précédentes,
dans lequel le modèle de surface est un réseau polygonal, en particulier un réseau triangulaire.

5. Procédé selon la revendication 4,
dans lequel les autres faisceaux de mesure de distance virtuels (30) rencontrent des polygones (34) voisins sans espace entre eux.

6. Procédé selon la revendication 4 ou 5,
dans lequel des valeurs de mesure virtuelles de la distance sont déterminées pour des polygones (36) qui sont entourés par des polygones (34) sur lesquels tombent les autres faisceaux de mesure de distance virtuels (30).

7. Procédé selon l'une des revendications précédentes,
dans lequel les points de départ des autres faisceaux de mesure de distance virtuels (30) forment une grille.

8. Procédé selon l'une des revendications précédentes,
dans lequel les autres faisceaux de mesure de distance virtuels (30) s'étendent parallèlement ou selon un angle aigu par rapport au premier faisceau de mesure de distance virtuel (28).

9. Procédé selon l'une des revendications précédentes,
dans lequel la valeur de mesure réelle et les valeurs de mesure virtuelles sont redéterminées et comparées de manière cyclique.

10. Procédé selon l'une des revendications précédentes,
dans lequel une valeur de mesure réelle supérieure à toutes les valeurs de mesure virtuelles est évaluée comme étant compatible et donc, pour ce cas, aucun objet (18) n'est détecté dans le faisceau de mesure de distance (14).

11. Procédé selon l'une des revendications précédentes,
dans lequel le capteur de distance (12) présente plusieurs faisceaux de mesure de distance (14) au moyen desquels une valeur de mesure réelle respective pour la distance est déterminée et comparée à des valeurs de mesure virtuelles provenant de faisceaux de mesure de distance virtuels (28, 30) pour un faisceau de mesure de distance respectif (14).

12. Procédé selon l'une des revendications précédentes,
dans lequel les faisceaux de mesure de distance (14) forment une cloche de protection (16), et
en particulier, aucun objet (18) n'est détecté dans le faisceau de mesure de distance (14) si la valeur de mesure réelle dépasse une longueur de la cloche de protection (16).

13. Procédé selon l'une des revendications précédentes,
dans lequel le faisceau de mesure de distance (14) exécute un mouvement de balayage.

14. Capteur de distance sans contact (12), en particulier capteur de distance optoélectronique selon le principe du temps de vol de la lumière, pour sécuriser une machine (10), en particulier un bras de robot, et pour détecter des objets (18) dans une zone de travail (20, 22) de la machine (10), le capteur de distance (12) comprenant un émetteur de lumière pour émettre un signal lumineux le long d'un faisceau de mesure de distance (14), un récepteur de lumière pour générer un signal de réception à partir du signal lumineux de retour, et une unité de commande et d'évaluation (24) qui est conçue pour mesurer une valeur de mesure réelle pour une distance par rapport à la zone de travail (20, 22) ou à un objet (18) qui y est disposé, et pour détecter l'objet (18) dans le faisceau de mesure de distance (14) à l'aide de la valeur de mesure réelle par un procédé selon l'une des revendications précédentes.
